(19) Europäisches Patentamt / European Patent Office / Office européen des brevets

(11) **EP 2 607 533 B1**

(12) **EUROPEAN PATENT SPECIFICATION**

(45) Date of publication and mention
of the grant of the patent:
**19.11.2025 Bulletin 2025/47**

(21) Application number: **12008375.3**

(22) Date of filing: **17.12.2012**

(51) International Patent Classification (IPC):
*D06N 7/00* (2006.01)     *D06M 17/00* (2006.01)
*D06N 3/00* (2006.01)     *D04H 1/4209* (2012.01)
*D04H 1/4218* (2012.01)     *D04H 1/587* (2012.01)
*D04H 1/64* (2012.01)     *D04H 3/004* (2012.01)
*D04H 3/005* (2012.01)     *D04H 3/011* (2012.01)
*D04H 3/12* (2006.01)     *D04H 3/16* (2006.01)
*C08L 3/02* (2006.01)     *D21H 17/36* (2006.01)
*D21H 17/37* (2006.01)     *D21H 21/18* (2006.01)
*D21H 17/67* (2006.01)     *E04B 1/66* (2006.01)
*D06N 5/00* (2006.01)     *C08K 3/00* (2018.01)
*C08L 31/04* (2006.01)

(52) Cooperative Patent Classification (CPC):
(C-Sets available)
**C08L 3/02; C08K 3/00; C08L 31/04; D04H 1/4209;
D04H 1/4218; D04H 1/587; D04H 1/64;
D04H 3/004; D04H 3/005; D04H 3/011; D04H 3/12;
D04H 3/16; D06M 17/00; D06N 3/0002;
D06N 5/003;**                    (Cont.)

(54) **Binder-consolidated textile fabric, method for producing it, and use thereof**

Mit Bindemittel verfestigtes Textilgewebe, Verfahren zu dessen Herstellung und dessen Verwendung

Tissu textile consolidé par un liant, son procédé de production, et son utilisation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2011 DE 102011121589**

(43) Date of publication of application:
**26.06.2013 Bulletin 2013/26**

(73) Proprietor: **Johns Manville Europe GmbH
86399 Bobingen (DE)**

(72) Inventors:
• **Frick, Agnes
89312 Günzburg (DE)**
• **Weizenegger, Herrmann
86830 Schwabmünchen (DE)**
• **Groh, Werner
86830 Schwabmünchen (DE)**

(74) Representative: **Dörr, Klaus
Dörr IP
Nordring 29
65719 Hofheim (DE)**

(56) References cited:
EP-A1- 0 649 870     EP-A1- 2 199 333
EP-A2- 0 659 928     EP-A2- 1 892 273
EP-A2- 2 192 153     WO-A1-90/09406
WO-A1-97/42271     CN-A- 101 926 387
DE-A1- 19 950 057     US-A- 2 996 462
US-A1- 2003 096 058     US-A1- 2009 139 675
US-A1- 2009 275 699

EP 2 607 533 B1

(52) Cooperative Patent Classification (CPC): (Cont.)
**D06N 7/006; D06N 7/0081; D21H 17/36;**
**D21H 17/37; D21H 17/67; D21H 21/18;** E04B 1/665

C-Sets
**C08L 3/02, C08L 31/04;**
**C08L 31/04, C08K 3/00, C08L 3/02;**
**C09D 131/04, C08K 3/00, C08L 3/02**

(52) Cooperative Patent Classification (CPC): (Cont.)
**D06N 7/006; D06N 7/0081; D21H 17/36;**
**D21H 17/37; D21H 17/67; D21H 21/18;** E04B 1/665

## Description

The invention relates to novel binder systems for consolidating textile fabrics, textile fabrics consolidated therewith, as well as products containing the binder system or a textile surface fitted therewith.

Textile fabrics, in particular those which are used as inserts for the manufacture of coated materials, have to meet various requirements. Examples of the use of such inserts are, among others, textile backings for carpets, textile reinforcements in PVC floorings or roofing sheets.

When used in the manufacture of roofing sheets, the used inserts or lining materials must have a sufficient mechanical stability, such as good perforation strength and good tensile strength, which appear, for example, during further processing, such as bituminization or laying. In addition, there is a need for high resistance to thermal stress, for example during bituminization, or to radiant heat and spreading fire.

When used in the manufacture of coated floorings, such as PVC floorings, additional demands are made on such inserts. In this field of application, said inserts not only have to meet the mechanical/thermal requirements but they have to avoid the formation of gaseous substances, since otherwise blistering can be observed during manufacture, for example by the formation of water vapor. Such blistering is very problematic and leads to yield loss and/or poor quality.

In addition to the aforementioned technical requirements, the environmental compatibility and/or new legal regulations account for the need to replace existing, to partly already well-functioning systems by new compliant systems. Examples thereof are new industrial standards, such as the DIN EN 14041, or legal changes, such as the REACH regulation.

The binder systems used so far for consolidating textile fabrics are based on thermoplastic and/or thermosetting binder systems. Examples thereof are aminoplasts and binders on the basis of acrylates.

There is hence a great need to provide novel binder systems for consolidating textile fabrics to be used as inserts which, on the one hand, meet the technical requirements and the legal regulations, and on the other hand, are available under economic aspects.

Binder systems based on starch are known from EP-A-2199333, EP-A-2192153 and EP-A-2231917. The systems are already very well-suited for the consolidation of textile fabrics. Nonetheless, there is a further requirement for binder systems which on the one hand satisfy legal requirements and on the other hand are available in terms of economics.

It was therefore the object of the present invention to provide novel binder systems for consolidating textile fabrics which, on the one hand, meet the technical requirements and the legal regulations, and on the other hand, are available under economic aspects. Another object is the processability of the binder systems by means of the known and established procedures so that investments can be kept at a low level. The binder systems must optimize a multiplicity of parameters at the same time, satisfactory strength, tear resistance, elongation and thermostability being important, in order to be suitable as a binder for the consolidation of industrial textile fabrics. The parameter tear resistance in particular is important for many industrial applications. Here, there is a particular requirement for improvement which the invention fulfills.

The present invention according to claim 6 is a textile fabric which is consolidated by means of a binder system comprising:

a) 10 to 90 % by weight, preferably 30 to 70 % by weight of polymerizates **based on** unsaturated **carboxylic acid** ester **derivatives** of acrylates or methacrylates and

b) 90 to 10% by weight, preferably 70 to 30% by weight of one or more **starches**, said starches being selected from native starches, cationic starches or anionic starches, and

c) 0 to 60% by weight of at least one additive selected from the group of amphoteric hydroxides, salts of the first and second main groups of the periodic table, mineral additives which are of synthetic or natural origin, kaolin, carbon blacks or mixtures thereof and

d) 0 to 10 % by weight of additives, selected from preservatives, stabilizers, antioxidants, anti-foaming agents, hydrophobizing agents and/or UV stabilizers, the information on the proportions by weight referring to the dry mass of the binder system, i.e. without water and the sum of the constituents a) to d) giving 100% by weight, and the polymerizates based on unsaturated carboxylic acid ester derivatives which have at least one terminal double bond and said unsaturated carboxylic acid ester derivatives of acrylates and methacrylates have been esterified by converting the basic acids and non- or polyvalent, branched or liner $C_1$ to $C_4$ alcohol.

Another subject matter of the present invention is the **binder system** for consolidating textile fabrics according to claim 1, comprising:

a) 10 to 90 % by weight, preferably 30 to 70 % by weight of **polymerizates based on** unsaturated **carboxylic acid** ester **derivatives** of acrylates or methacrylates and

b) 90 to 10% by weight, preferably 70 to 30% by weight of one or more **starches**, said starches being selected from native starches, cationic starches or anionic starches, and

c) 0 to 60% by weight of at least one additive selected from the group of amphoteric hydroxides, salts of the first and second main groups of the periodic table, mineral additives which are of synthetic or natural origin, kaolin, carbon blacks or mixtures thereof and

d) 0 to 10 % by weight of additives, selected from preservatives, stabilizers, antioxidants, anti-foaming agents, hydrophobizing agents and/or UV stabilizers, the information on the proportions by weight referring to the dry mass of the binder system, i.e. without water and the sum of the constituents a) to d) giving 100% by weight, and the polymerizates based on unsaturated carboxylic acid ester derivatives which have at least one terminal double bond and said unsaturated carboxylic acid ester derivatives of acrylates or methacrylates have been esterified by converting the basic acids and non- or polyvalent, branched or linear $C_1$ to $C_4$ alcohol.

The quantity of the binder system of the invention applied to the textile fabric is preferably between 5 and 35 % by weight dry binder, in particular 10 and 30 % by weight, most preferably 10 and 25 % by weight dry binder after drying referring to the total weight of the untreated textile fabric.

If the binder system used according to the invention shall be utilized as an aqueous dispersion or solution, the solids content is preferably between 10 and 40 % by weight, in particular between 10 and 30 % by weight, most preferably 15 to 25 % by weight (determined according to DIN EN ISO 3251).

If the binder system used according to the invention shall be utilized as an aqueous dispersion or solution, the viscosity is preferably 1 to 3000 mPa*s, in particular 2 to 2500 mPa*s, most preferably 5 to 2000 mPa*s (determined according to DIN EN ISO 2555 and 23 °C).

If the binder system according to the invention shall be used as an aqueous polymer dispersion, conventional and known emulsifying agents or protective colloids can be added for stabilization. These are known to the person skilled in the art (cf. Houben-Weyl, Methoden der org. Chemie, vol. XIV/1, 1961, Stuttgart). Examples of emulsifying agents are polyglycolethers, fatty alcohol-polyglycolethers, phosphoric esters and their salts, sulfonated paraffin hydrocarbons, higher alkyl sulfates (such as lauryl sulfate), alkali metal salts of fatty acids, such as sodium stearate or sodium oleate, sulfuric acid semi-ester of ethoxylated fatty acid alcohols, salts of esters and semi-esters of alkyl polyoxyethylene sulfosuccinates, salts of sulfonated alkyl aromatics, such as sodium dodecyl benzolsulfonate, ethoxylated C4-C12-alkylphenols and their sulfonation products such as ester of the sulfosuccinic acid. Examples for protective colloids are alkylhydroxyalkyl celluloses, partly or completely hydrolyzed polyvinyl alcohols and copolymers thereof, acrylic acid, homopolymers and copolymers and partly neutralized salts thereof, acrylamide copolymers, polyacrylate copolymers and salts thereof, carboxyalkyl cellulose, such as carboxymethyl cellulose and its salts.

If the binder system according to the invention shall be utilized as an aqueous polymer dispersion, the pH-value (measured as a 10 % by weight solution in water) is between 2 and 10, preferably between 4 and 8 (determined according to DIN EN ISO 976).

The textile fabric consolidated by means of the binder system according to the invention has satisfactory strength and thermostability. Furthermore, the textile fabrics consolidated by means of the binder system according to the invention have an elongation which is at least as good or even improved. Surprisingly, the tear resistance is markedly improved and usually increased by almost 10% by means of the binder system according to the invention however.

Beyond that, the binder system of the invention is only slightly hygroscopic and has a low water suction performance, so that no restrictions on the use of the consolidated textile fabrics as lining materials in the manufacture of PVC floorings, for example by blistering, can be observed.

Likewise surprising is the aging behavior of the consolidated textile fabric which is almost constant even though a person skilled in the art would expect a worsening of the aging behavior.

By means of the partial replacement with starch and special polymerizates based on unsaturated carboxylic acid ester derivatives, considerable cost saving effects are realized, it being possible in addition to starch to also use further additives, for example amphoteric hydroxides, salts of the first and second main groups of the periodic table, mineral additives which are of synthetic or natural origin, kaolin, carbon blacks or mixtures of the same with starch. In addition, a binder system almost completely free of formaldehyde is obtained without being obliged to cut back on the product properties.

The binder system of the invention does not comprise polymerizates produced by polymerization of conjugated aliphatic dienes, in particular butadiene, isoprene, pentadiene-1,3, dimethyl butadiene and/or cyclopentadiene.

The polymerizates based on carboxylic acid derivatives which are used according to the invention are known per se (e.g., they can be seen from the technical data sheets).

The polymerizate based on carboxylic acid derivatives used according to the invention is materials which have been obtained by polymerization of monomeric carboxylic acid derivatives which have at least one terminal double bond.

The basic monomers are unsaturated carboxylic acid esters of unsaturated acrylates and/or methacrylates which have been esterified by converting the basic acids and mono- or polyvalent, branched or linear $C_1$ to $C_4$ alcohol. Preferably, the preceding alcohols are methanol, ethanol, propanol, isopropanol, butanol, 1-butanol, 2-butanol or tert-butanol. The preceding unsaturated carboxylic acids are acrylic acid and/or methacrylic acid.

In addition to the alcohols mentioned, polyols, polyamines, polyalkanolamines or mixtures thereof are also possible as cross-linking agents.

Among the polyols, glycols, glycol ethers, polyester polyols, polyether polyols, polysaccharides, polyvinyl alcohols, or their mixtures are preferred.

Trimethylolpropane, pentaerythritol, ethylene glycol, propylene glycol, triethylene glycol, glycerol and sugar alcohols, such as sorbite and inositol, are particularly preferred polyols. Besides the aforementioned polyols, polyvalent alcohols can also be used as cross-linking agents.

The term polyvalent alcohols refers to alcohols having at least two hydroxyl groups which can be branched or straight-chained. The alcohols/polyols can also be used as a mixture, i.e., a mixture of two different alcohols or polyols.

Among the polyamines, hexanediamine, ethylenediamine, melamine, diethylenetriamine, triethylenetetramine, aminoanilin, aminoamides, or their mixtures are preferred.

Among the polyalkanolamines, alkanolamines, in particular monoethanolamine, diethanolamine, triethanolamine, or their mixtures are preferred.

The polymerizates based on unsaturated carboxylic acid esters, used according to the invention, which have been obtained by polymerization of monomeric unsaturated carboxylic acid esters, which have at least one terminal double bond, have preferably been polymerized by heating. The polarization can be controlled by using suitable stabilizers, for example hydroquinone.

Starches according to the invention are natural - so-called native - starches and modified starches, such as cationic or anionic starches, or starch derivatives (so-called chemically modified starches). Starches with a sufficient solubility in cold and/or hot medium are generally advantageous.

A group of starches that might be used within the scope of the invention comprises starches extracted from vegetable raw materials. These include among others starches from tubers, such as potatoes, manioc, arrowroot, batata, from seeds, such as wheat, maize, rye, rice, barley, millet, oat, sorghum, from fruits, such as chestnuts, acorns, beans, peas, and other pulses, bananas, as well as from plant marrow, e.g. of the sago palm.

The starches usable within the scope of the invention essentially consist of amylose and amylopectin in changing proportions.

The molecular weights of the starches useful according to the invention can vary over a wide range. The starches consisting essentially of a mixture of amylose and amylopectin preferably have molecular weights $M_w$ in the range of between $5 \times 10^2$ and $1 \times 10^8$, particularly preferably between $5 \times 10^4$ and $1 \times 10^7$.

Besides starches of native vegetable origin, starches which are chemically modified, have been obtained by fermentation, are of recombinant origin or have been produced by biotransformation (biocatalysis), are also equally preferred.

The term "biotransformation" is interchangeable with the term "biocatalysis".

"Chemically modified starches" means starches whose properties have been chemically modified compared to the natural properties. This is essentially reached by polymer-analogous reactions during which starch is treated with monofunctional, bifunctional or polyfunctional reagents or oxidizing agents. In this process, preferably the hydroxyl groups of the starch are modified by etherification, esterification or selective oxidation; or the modification is based on a radically initiated graft copolymerization of copolymerizable unsaturated monomers on the starch backbone.

Particular chemically modified starches include, among others, starch esters, such as xanthogenates, acetates, phosphates, sulfates, nitrates, starch ethers, such as nonionic, anionic or cationic starch ethers, oxidized starches, such as dialdehyde starch, carboxy starch, persulfate-degraded starches and similar substances.

In the linguistic usage of the invention, "fermentative starches" refers to starches which are extracted in fermentative processes using natural organisms, such as fungi, algae or bacteria, or which may be extracted with the activation and help of fermentative processes. Examples for starches obtained from fermentative processes include among others gum arabic and related polysaccharides (gellan gum, ghatti gum, karaya gum, gum tragacanth), xanthan, emulsan, rhamsan, wellan, schizophyllan, polygalacturonates, laminarin, amylose, amylopectin and pectines.

"Starches of recombinant origin" or "recombinant starches" in the invention refers to starches which are extracted in fermentative processes using organisms not occurring in nature, but with the help of natural organisms that are modified by using genetic methods, such as fungi, algae or bacteria, or which may be extracted with the activation and help of fermentative processes. Examples for starches obtained from fermentative, genetically modified processes include, among others, amylose, amylopectin and polyglucanes.

For the purposes of the present invention, "starches prepared by biotransformation" means that starches, amylose, amylopectin or polyglucans are produced by a catalytic reaction of monomeric basic components, generally of oligomeric saccharides, in particular of mono- or disaccharides, by using a biocatalyst (or: enzyme) under specific conditions. Examples for starches obtained from biocatalytic processes are, among others, polyglucan and modified polyglucans, polyfructan and modified polyfructans.

Furthermore, the invention also comprises derivatives of the starches particularly mentioned. In this context, the terms "derivative of starches" or "starch derivatives" generally refer to modified starches, i.e. such starches in which the natural amylose/amylopectin ratio were modified to change their properties, a pre-gelatinization was carried out, which were subject to a hydrolytic degradation or were chemically derivatized.

Examples of particular derivatives of starches are, among others, oxidized starches, e.g., dialdehyde starch or other oxidation products having carboxyl functions, or native ionic starches (e.g., with phosphate groups) or starches which have been further modified ionically, wherein this term covers both anionic and cationic modifications.

The destructurized starches, which may be used in the context of the invention, comprise those which, for example, were homogenized by means of glycerol such that no more crystalline reflexes occur in the X-ray diffraction and starch grains or double-refracting regions are no longer visible at a thousand-fold magnification in the polarization microscope. In this context, reference is made to DE-A1-3931363 of which the disclosure of destructurized starches is also part of the this description.

The starches used according to the invention are commercially available from Avebe, Cargill, National Starch, Penford Products Co, Purac or Südstärke, for example.

Especially advantageous are starches which have a sufficient solubility in cold and/or hot medium. A sufficient solubility is given if the viscosity of the binder system according to the invention allows a corresponding workability.

The additives used according to the invention selected from the group of amphoteric hydroxides, salts of the first and second main groups of the periodic table, mineral additives which are of synthetic or natural origin, kaolin, carbon blacks or mixtures are basically not subject to any limitation but must be compatible with the other components.

Those hydroxide compounds which are soluble both in an acidic and in an alkaline medium are termed as amphoteric hydroxides in the sense of the present invention.

Technically suitable examples for amphoteric hydroxides are copper (II) hydroxide $Cu(OH)_2$, tin hydroxide $Sn(OH)_2$ or $Sn(OH)_4$, antimony hydroxide $Sb(OH)_3$ or $Sb(OH)_5$, aluminum hydroxide $Al(OH)_3$, chromium (III) hydroxide $Cr(OH)_3$, lead hydroxide $Pb(OH)_2$ and zinc hydroxide: $Zn(OH)_2$, wherein some of the compounds mentioned are technically suitable, however, they cannot be used due to their environmental relevance.

Amphoteric hydroxides of aluminum are particularly preferably used. Precipitated amphoteric aluminum hydroxide $Al(OH)_3$ is very particularly preferably used. It should be noted that the material does not induce dehydration up to a temperature of 200 °C and is not hygroscopic.

The aluminum hydroxides used according to the invention are commercially, available from Nabaltec, for example, under the name Apyral.

The salts of the first and second main groups of the periodic table are preferably hydroxides, sulfates, hydrogen carbonates and carbonates which must be compatible with the other components. Examples of these are magnesium hydroxide, calcium carbonate, barium sulfate.

Mineral additives, which are of synthetic or natural origin, in the sense of the present invention are preferably marble powder, kaolinite (china clay) and/or kaolinite-containing clays such as kaolin (porcelain clay).

The kaolins used according to the invention are not subject to restrictions; however, they must be compatible with the other components.

For the purposes of the present invention, kaolins are china clays and/or porcelain clays. These essentially comprise the mineral kaolinite, which can be described by means of the chemical formula $Al_2[(OH)_4/Si_2O_5]$ or $Al_2O_3*2SiO_2*2H_2O$. The kaolinites usually have a composition with 39.7% $Al_2O_3$, 46.4% $SiO_2$ and 13.9% $H_2O$.

Kaolinite and the chemically identically composed clay minerals dickite and nacrite are so-called double layer silicates which belong to the phyllosilicates. These have to be equated with the kaolins of the invention and shall be encompassed by the invention.

The kaolins used according to the invention are commercially available from Huber, for example, under the name Huber 90.

The kaolins used have to be stable up to a temperature of 200 °C, i.e., they must not dehydrate or be hydroscopic.

The carbon blacks are preferably commercially available products.

In a particular embodiment of the present invention, in addition to the starch, the binder system has at least two constituents selected from the group of amphoteric hydroxides, salts of the first and second main groups of the periodic table, mineral additives which are of synthetic or natural origin, kaolin, carbon blacks or mixtures thereof, ratios of 1:10 to 10:1 (proportions by weight) proving particularly preferred.

The binder system used according to the invention may also contain up to 10% by weight of additives. These are commercially available additives such as preservatives, stabilizers, antioxidants, anti-foaming agents, hydrophobizing agents, UV stabilizers, fillers and/or pigments. They are partly contained in the commercial products and serve to stabilize storage and transport or may be added later in order to meet the customer's specifications.

Within the scope of this description, the term "textile fabric" is to be understood in its widest meaning. It may be used for all structures composed of fibers which have been manufactured according to a surface-forming method. The fiber-forming materials are natural fibers, mineral fibers, glass fibers, fibers composed of synthetic products and/or fibers composed of synthesized polymers. For the purposes of the present invention, textile fabrics are in particular understood as being woven fabrics, yarn sheets, knitted fabrics or non-woven fabrics, in particular non-woven fabrics.

Textile fabrics on the basis of mineral fibers and/or glass fibers are in particular non-woven fabrics on the basis of mineral fibers and/or glass fibers. The aforementioned non-woven fabrics on the basis of mineral fibers and/or glass fibers can also be combined with other textile fabrics, in particular non-woven fabrics.

The employed non-woven fabrics composed of glass fibers or mineral fibers can be manufactured by means of any known method. Non-woven glass fiber fabrics which have been manufactured by means of the wet laid process, the dry laid process or the air laid process are particularly suitable. In the course of the manufacturing process, in particular the wet laid process, these non-woven fabrics may contain small proportions of chemical auxiliary substances as a result of the process, for example thickening agents, anti-foaming agents, etc. These substances originate from the circulation water in the manufacture of non-woven fabrics.

The non-woven fabrics composed of mineral fibers and used according to the invention can be consolidated by means of the binder system according to the invention and additionally by mechanical methods, e.g., needling or hydrodynamic needling. They are most preferably carded non-woven fabrics composed of filaments, i.e. endlessly long fibers, or of staple fibers. The average diameter of the mineral fibers is between 8 and 15 $\mu$m, preferably between 10 and 12 $\mu$m.

Suitable mineral fibers include aluminosilicate fibers, ceramic fibers, dolomite fibers, or fibers of vulcanite, such as basalt, diabase, melaphyre. These are commonly referred to as palaeobasalts; alternatively, diabase is also often called greenstone.

The weight per unit area of the non-woven fabrics composed of mineral fibers and used according to the invention is between 20 and 350 g/m$^2$, preferably between 25 and 90 g/m$^2$. The information given above also applies to the glass non-woven fabrics described below.

The non-woven fabrics composed of glass fibers and used according to the invention can be consolidated by means of binders or else by mechanical methods, e.g., needling or hydrodynamic needling. The glass fibers may be filaments or finite or cut glass fibers wherein in the latter case, the length of the fibers is between 1 and 40 mm, preferably 4 to 20 mm. The average diameter of the glass fibers is between 6 and 20 $\mu$m, preferably between 8 and 15 $\mu$m.

Suitable glass fibers include glass types such as E-glass, S-glass, R-glass or C-glass, wherein E-glass or C-glass is preferred for economic reasons.

Among the textile fabrics on the basis of synthetic polymers, non-woven fabrics composed of fibers from synthetic polymers, in particular spinbonded fabrics, so-called spunbonds, which are produced by random deposition of freshly melt-spun filaments, are preferred. They consist of continuous synthetic fibers composed of melt-spinnable polymer materials. Suitable polymer materials include, for example, polyamides, such as e.g. polyhexamethylene diadipamide, polycaprolactam, wholly or partly aromatic polyamides ("aramids"), aliphatic polyamides, such as e.g. nylon, partly or wholly aromatic polyesters, polyphenylene sulfide (PPS), polymers having ether and keto groups, such as e.g. polyether ketones (PEKs) and polyether ether ketone (PEEK), polyolefins, such as e.g. polyethylene or polypropylene, or polybenzimidazoles.

Preferably, the spinbonded fabrics consist of melt-spinnable polyesters. The polyester material can, in principle, be any known type suitable for fiber production. Such polyesters consist predominantly of components derived from aromatic dicarboxylic acids and from aliphatic diols. Commonly used aromatic dicarboxylic acid components are bivalent residues of benzenedicarboxylic acids, especially of the terephthalic acid and the isophthalic acid; commonly used diols have 2 to 4 carbon atoms, wherein ethylene glycol is particularly suitable. Spinbonded fabrics which consist of at least 85 mole % of polyethylene terephthalate are particularly advantageous. The remaining 15 mole % are then comprised of dicarboxylic acid units and glycol units which act as so-called modifiers and allow the person skilled in the art to targetedly influence the physical and chemical properties of the produced filaments. Examples of such dicarboxylic acid units are residues of isophthalic acid or aliphatic dicarboxylic acid, such as e.g. glutaric acid, adipic acid, and sebacic acid; examples of modifying diol residues are those composed of longer-chain diols, e.g. propane diol or butane diol, of diethylene or triethylene glycol or, if present in small quantities, of polyglycol with a molecular weight of ca. 500 to 2000.

Polyesters containing at least 95 mole % of polyethylene terephthalate (PET) are particularly preferred, especially those composed of unmodified PET.

The individual titers of the polyester filaments in the spinbonded fabric amount to between 1 and 16 dtex, preferably between 2 and 8 dtex.

In another embodiment of the invention, the textile fabric of the spinbonded fabric may also be a melt binder-bonded non-woven fabric which contains lining and hot-melt adhesive fibers. The lining and hot-melt adhesive fibers can be derived from any thermoplastic, fiber-forming polymers. Additionally, lining fibers can also be derived from non-fusing filament-forming polymers. Such spinbonded fabrics which have been consolidated by means of a melt binder are described, for example, in EP-A-0,446,822 and EP-A-0,590,629.

In a preferred embodiment of the invention, the textile fabric was subjected to mechanical and chemical consolidation with the binder system according to the invention. Such a consolidation further improves the application properties of the lining material.

The textile fabric may have a single-layer or multi-layer structure.

The weight per unit area of the textile fabric, in particular the spunbonded fabric, is between 20 and 500 g/m$^2$, preferably between 40 and 400 g/m$^2$, in particular between 90 and 250 g/m$^2$.

In a further embodiment of the invention, such textile fabrics have at least one reinforcement, in particular if they are used as lining materials. They are preferably designed such that the reinforcement absorbs a force so that the reference force in the force-elongation diagram (at 20°C) of the lining material with reinforcement compared to the lining material without reinforcement differs within the range between 0 and 1% of elongation in at least one point by at least 10%.

In another embodiment, the reinforcement can be incorporated in such a way that, due to the reinforcement, forces are only absorbed at higher elongations.

Multifilaments and/or monofilaments on the basis of aramids, preferably so-called high-modulus aramids, carbon, glass, glass rovings, mineral fibers (basalt), high-strength polyester monofilaments or multifilaments, high-strength polyamide monofilaments or multifilaments, as well as so-called hybrid multifilament yarns (yarns containing reinforcing fibers and lower-melting binding fibers) or wires (monofilaments) composed of metals or metal alloys, are preferably used as reinforcing filaments.

For economic reasons, preferred reinforcements consist of glass multifilaments in the form of - essentially - parallel warp sheets or scrims. In most cases, the non-woven fabrics are reinforced in the longitudinal direction by - essentially - parallel warp sheets.

The reinforcing filaments may be used as such or in the form of a discrete textile fabric, for example as a woven fabric, yarn sheet, knitted fabric or non-woven fabric. Reinforcements with reinforcing yarns running parallel to each other, that is warp sheets, as well as scrims or woven fabrics are preferred.

The measurement of the reference force is carried out in accordance with EN 29073, part 3, on 5 cm wide samples at a restraint length of 200 mm. Here, the numerical value of the pretension, given in centinewton, corresponds to the numerical value of the area mass of the sample, given in gram per square meter.

The reinforcement may be carried out by the inclusion of the reinforcements in the textile fabric, on at least one face of the textile fabric or else at any location of the lining material, in particular in other textile fabrics differing from the first textile fabric, or as an individual textile fabric.

The lining materials according to the invention containing the textile fabric consolidated according to the invention may be equipped with further functional layers. This means measures or functional layers which increase the resistance to penetration of roots of the lining material, for example. These are also a subject matter of the invention.

The lining material according to the invention may have further textile fabrics in addition to the textile fabric according to the invention already described. Preferably, these further textile fabrics differ from the textile fabric first mentioned, i.e. they are made of a different material.

Insofar as the textile fabric is made up of synthetic polymers, it may be necessary to include further textile fabrics in the lining material according to the invention in order to optimize the application properties.

It is surprising to the person skilled in the art that the use of the binder system of the invention can improve the properties of the textile fabric, particularly with regard to tear resistance.

The textile fabric consolidated according to the invention can be used as a lining material itself or in combination with further textile fabrics as a lining material for coated sarking membranes, roofing sheets and water-proof sheetings as well as a textile backing or a textile reinforcement in floorings, in particular carpets and PVC floorings which are also a subject-matter of the invention.

The textile fabric consolidated according to the invention can be used as a lining material itself or in combination with further textile fabrics as a lining material for the manufacture of coated sarking membranes, roofing sheets and water-proof sheetings, preferably for the manufacture of bituminized sarking membranes, roofing sheets and water-proof sheetings. Apart from that, the linings according to the invention may also be used in flooring applications and in the field of filtration. Polyethylene or polyvinyl chloride, polyurethanes, EPDM or TPO (polyolefins) are used as coating compounds for floorings or carpet backings. Besides that, bitumen is used for the coated sarking membranes, roofing sheets and water-proof sheetings.

The bituminized sheets contain at least one - above-described - lining sheet which is embedded in a bitumen matrix, wherein the percentage by weight of the bitumen related to the weight per unit area of the bituminized roofing sheet is preferably 60 to 97% by weight and that of the spinbonded fabric 3 to 40% by weight.

The manufacture of the textile fabrics is carried out by means of known methods and processes. The manufacture of the consolidated textile fabric is carried out by means of the following measures:

A) formation of a textile fabric and optionally mechanical consolidation thereof,
B) application of the binder system according to the invention, comprising:

I) 10 to 90% by weight, preferably 30 to 70% by weight of polymerizates based on carboxylic acid, in particular polycarboxylic acid, which can be cross-linked by means of a cross-linking agent, and
II) 10 to 90% by weight, preferably 30 to 70% by weight of polyvinyl acetate, and
III) 90 to 10% by weight, preferably 70 to 30% by weight of one or more **starches** and
IV) 0 to 60% by weight of at least one additive from the group of amphoteric hydroxides, salts of the first and second main groups of the periodic table, mineral additives which are of synthetic or natural origin, kaolin, carbon blacks or mixtures thereof and

V) 0 to 10 % by weight of additives,

C) drying and consolidation of the binder,

wherein the specified percentages by weight refer to the dry weight of the binder system, i.e., without water.

The formation of the textile fabric is carried out by means of known measures.

The implementation of the mechanical consolidation optionally carried out also takes place by means of known methods.

The inclusion of the optionally present reinforcement is carried out during or after the formation of the textile fabric or before or during the application of the binder system according to the invention. The supply of the reinforcement and optionally any further heat treatment in the manufacturing process preferably takes place under stress, in particular longitudinal stress.

The supply of further textile fabrics optionally to be included takes place before or during the consolidation of the binder system according to the invention.

The application of the binder system in step B) is also carried out by means of known methods. The applied layer of binder (after drying) is preferably between 5 and 35 % per weight, in particular 10 and 30 % by weight, most preferably 10 and 25 % by weight dry binder referring to the total weight of the untreated textile fabric.

Drying or consolidation of the binder is also carried out by means of methods known to the person skilled in the art, wherein temperatures of 160 °C to 210 °C prove to be advantageous. The drying or consolidation process causes among other things the condensation of the cross-linking agent with the carbonic acid with formation of the corresponding condensates.

The individual procedure measures are known per se, but patentable in the combination or order according to the invention and with the use of the binder system according to the invention.

**Measurement methods:**

The specific strength is a measure of the influence of the binder on the strength of the non-woven fabric:

$$F_s = (BW\ (l) + BW\ (q))\ /\ G_b.$$

The tensile strength BW (lengthwise, crosswise) corresponds to the tear strength which, according to DIN EN 29 073-3, is measured on samples of 5 cm width and 30 cm length. $G_b$ corresponds to the weight per unit area with binders in g/m$^2$.

The hot strength is a measure of the longitudinal strength of the non-woven fabric at 200°C. The strength is determined in accordance with DIN EN 29 073-3, wherein the measurement is carried out at 200°C in a furnace.

The permeability is measured according to DIN EN ISO 9237 in [l/m$^2$ sec]; the solids content is measured according to DIN EN ISO 3251.

The viscosity is measured according to DIN EN ISO 2555 at 23°C.

The pH value is determined as a 10% by weight solution in water according to DIN ISO 976.

The tear resistance is determined according to DIN EN ISO 9073-4, the elongation and strength are determined according to DIN EN 29073-3. The determination of the shrinkage takes place at 200°C for 10 min.

The water absorption capacity is measured according to DIN 18191.

**Claims**

1. A binder system for consolidating textile fabrics, comprising:

   a) 10 to 90 % by weight of polymerizates based on unsaturated carboxylic acid ester derivatives of acrylates or methacrylates and
   b) 90 to 10 % by weight of one or more starches, said starches being selected from native starches, cationic starches or anionic starches, and
   c) 0 to 60% by weight of at least one additive selected from the group of amphoteric hydroxides, salts of the first and second main groups of the periodic table, mineral additives which are of synthetic or natural origin, kaolin, carbon blacks or mixtures thereof and
   d) 0 to 10 % by weight of additives selected from preservatives, stabilizers, antioxidants, antifoaming agents, hydrophobizing agents and/or UV stabilizers,

   the information on the proportions by weight referring to the dry mass of the binder system, i.e. without water and the sum of the constituents a) to d) giving 100% by weight, and the polymerizates based on unsaturated carboxylic acid ester derivatives of acrylates or methacrylates having been obtained by means of polymerization of monomeric unsaturated carboxylic acid ester derivatives which have at least one terminal double bond and said unsaturated carboxylic acid ester derivatives of acrylates or methacrylates have been esterified by converting the basic acids and mono- or polyvalent, branched or linear $C_1$ to $C_4$ alcohol.

2. The binder system according to Claim 1, **characterized in that**, in addition to the starch, this has at least two constituents selected from the group of amphoteric hydroxides, salts of the first and second main groups of the periodic table, mineral additives which are of synthetic or natural origin, kaolin, carbon blacks.

3. The binder system according to Claim 1 or 2, **characterized in that** it is a dispersion and that the polymer solids content of the dispersion, in particular the polymer solids content of the dispersions, is between 10 and 40 % by weight.

4. The binder system according to Claim 1 to 3, **characterized in that** it is a dispersion and the viscosity of the dispersion is 1 to 3000 mPa*s measured according to DIN EN ISO 2555 at 23°C.

5. Use of the binder system according to one or more of claims 1 to 4 for the consolidation of textile fabrics.

6. A textile fabric which has been consolidated by means of a binder system according to one or more of claims 1 to 4 and comprises

a) 10 to 90 % by weight of polymerizates based on unsaturated carboxylic acid ester derivatives of acrylates or methacrylates and
b) 90 to 10 % by weight of one or more starches, said starches being selected from native starches, cationic starches or anionic starches, and
c) 0 to 60% by weight of at least one additive selected from the group of amphoteric hydroxides, salts of the first and second main groups of the periodic table, mineral additives which are of synthetic or natural origin, kaolin, carbon blacks or mixtures thereof and
d) 0 to 10 % by weight of additives selected from preservatives, stabilizers, antioxidants, antifoaming agents, hydrophobizing agents and/or UV stabilizers,

the information on the proportions by weight referring to the dry mass of the binder system, i.e. without water and the sum of the constituents a) to d) giving 100% by weight, and the polymerizates based on unsaturated carboxylic acid ester derivatives of acrylates or methacrylates having been obtained by means of polymerization of monomeric unsaturated carboxylic acid ester derivatives which have at least one terminal double bond and said unsaturated carboxylic acid ester derivatives of acrylates or methacrylates have been esterified by converting the basic acids and mono- or polyvalent, branched or linear $C_1$ to $C_4$ alcohol.

7. The textile fabric according to Claim 6, **characterized in that** the applied quantity of the binder system is between 5 and 35 wt % of dry binder in relation to the total weight of the raw textile fabric.

8. The textile fabric according to Claim 6 or 7, **characterized in that** said textile fabric having a weight per unit area of 20 and 500 $g/m^2$ is any structure composed of fibers which has been manufactured according to a surface forming method.

9. The textile fabric according to Claim 6 to 8, **characterized in that** it is a textile fabric on the basis of natural fibers, fibers composed of synthetic products and/or fibers composed of synthesized polymers, preferably the textile fabrics are non-wovens made of synthetic polymer fibers, in particular a spunbonded non-woven.

10. A textile fabric according to Claim 6 to 9, **characterized in that** said textile fabric is a non-woven fabric made of fibers of glass fibers and/or mineral fibers.

11. A lining material for sarking membranes, roofing sheets and water-proof sheetings, textile backings or textile reinforcements in floorings, in particular in carpets and PVC floorings, comprising at least one textile fabric according to one or more of claims 6 to 10.

12. A lining material according to Claim 11, **characterized in that** it has at least one further textile fabric besides the textile fabric according to one or more of claims 6 to 10 which differ from each other.

13. A coated sarking membrane, roofing sheet and water-proof sheeting, comprising at least one coating compound and at least one textile fabric according to one or more of Claims 6 to 10 or a lining material according to Claim 11 or 12.

14. A flooring, in particular a carpet or a PVC flooring, comprising a textile backing or a textile reinforcement comprising at least one textile fabric according to one or more of Claims 6 to 10 or a lining material according to Claim 11 or 12.

**Patentansprüche**

1. Bindemittel zum Verfestigen von Textilgeweben, umfassend:

a) 10 bis 90 Gew.-% Polymerisate basierend auf ungesättigten Carbonsäureester-Derivaten von Acrylaten und Methacrylaten und
b) 10 bis 90 Gew.-% von einer oder mehreren Stärken, wobei die Stärken aus nativen Stärken, kationischen Stärken oder anionischen Stärken ausgewählt sind, und
c) 0 bis 60 Gew.-% von mindestens einem Additiv, ausgewählt aus der Gruppe der amphoteren Hydroxide, Salzen der ersten und zweiten Hauptgruppe des Periodensystems, mineralischen Additiven, die synthetischen oder natürlichen Ursprungs sind, Kaolin, Rußen oder Mischungen davon, und

d) 0 bis 10 Gew.-% Additive, ausgewählt aus Konservierungsmitteln, Stabilisatoren, Antioxidantien, Antischaummitteln, Hydrophobierungsmitteln und/oder UV-Stabilisatoren,

wobei sich die Angaben zu den Gewichtsanteilen auf die Trockenmasse des Bindemittelsystems, also ohne Wasser, beziehen und die Summe der Bestandteile a) bis d) 100 Gew.-% ergibt, und die Polymerisate basierend auf ungesättigten Carbonsäureester-Derivaten von Acrylaten und Methacrylaten durch Polymerisation monomerer ungesättigter Carbonsäureester-Derivate erhalten wurden, die mindestens eine terminale Doppelbindung aufweisen, und wobei die ungesättigten Carbonsäureester-Derivate von Acrylaten oder Methacrylaten durch Umsetzung der basischen Säuren mit ein- oder mehrwertigem, verzweigtem oder linearem $C_1$- bis $C_4$-Alkohol verestert wurden.

2. Bindemittelsystem nach Anspruch 1, **dadurch gekennzeichnet, dass** es zusätzlich zu der Stärke mindestens zwei Bestandteile aufweist, die aus der Gruppe der amphoteren Hydroxide, Salzen der ersten und zweiten Hauptgruppe des Periodensystems, mineralischen Additiven, die synthetischen oder natürlichen Ursprungs sind, Kaolin, Rußen ausgewählt sind.

3. Bindemittelsystem nach Anspruch 1 oder 2, **dadurch gekennzeichnet, dass** es sich um eine Dispersion handelt und dass der Polymerfeststoffgehalt der Dispersion, insbesondere der Polymerfeststoffgehalt der Dispersionen, zwischen 10 und 40 Gew.-% liegt.

4. Bindemittelsystem nach Anspruch 1 bis 3, **dadurch gekennzeichnet, dass** es sich um eine Dispersion handelt und die Viskosität der Dispersion 1 bis 3000 mPa*s, gemessen nach DIN EN ISO 2555 bei 23 °C, beträgt.

5. Verwendung des Bindemittelsystems nach einem oder mehreren der Ansprüche 1 bis 4 für die Verfestigung von Textilgewebe.

6. Textilgewebe, das unter Verwendung eines Bindemittelsystems nach einem oder mehreren der Ansprüche 1 bis 4 verfestigt wurde und Folgendes umfasst:

a) 10 bis 90 Gew.-% Polymerisate basierend auf ungesättigten Carbonsäureester-Derivaten von Acrylaten und Methacrylaten und

b) 10 bis 90 Gew.-% von einer oder mehreren Stärken, wobei die Stärken aus nativen Stärken, kationischen Stärken oder anionischen Stärken ausgewählt sind, und

c) 0 bis 60 Gew.-% von mindestens einem Additiv, ausgewählt aus der Gruppe der amphoteren Hydroxide, Salzen der ersten und zweiten Hauptgruppe des Periodensystems, mineralischen Additiven, die synthetischen oder natürlichen Ursprungs sind, Kaolin, Rußen oder Mischungen davon und

d) 0 bis 10 Gew.-% Additive, ausgewählt aus Konservierungsmitteln, Stabilisatoren, Antioxidantien, Antischaummitteln, Hydrophobierungsmitteln und/oder UV-Stabilisatoren,

wobei sich die Angaben zu den Gewichtsanteilen auf die Trockenmasse des Bindemittelsystems, also ohne Wasser, beziehen und die Summe der Bestandteile a) bis d) 100 Gew.-% ergibt, und die Polymerisate basierend auf ungesättigten Carbonsäureester-Derivaten von Acrylaten und Methacrylaten durch Polymerisation monomerer ungesättigter Carbonsäureester-Derivate erhalten wurden, die mindestens eine terminale Doppelbindung aufweisen, und wobei die ungesättigten Carbonsäureester-Derivate von Acrylaten oder Methacrylaten durch Umsetzung der basischen Säuren mit ein- oder mehrwertigem, verzweigtem oder linearem $C_1$- bis $C_4$-Alkohol verestert wurden.

7. Textilgewebe nach Anspruch 6, **dadurch gekennzeichnet, dass** die aufgebrachte Menge des Bindemittelsystems zwischen 5 und 35 Gew.-% trockenes Bindemittel im Verhältnis zum Gesamtgewicht des unbehandelten Textilgewebes beträgt.

8. Textilgewebe nach Anspruch 6 oder 7, **dadurch gekennzeichnet, dass** das Textilgewebe ein Flächengewicht zwischen 20 und 500 g/m$^2$ aufweist und es sich dabei um jegliche Struktur handelt, die aus Fasern zusammengesetzt ist und nach einem flächenbildenden Verfahren hergestellt wurde.

9. Textilgewebe nach Anspruch 6 bis 8, **dadurch gekennzeichnet, dass** es sich dabei um ein Textilgewebe auf der Basis von Naturfasern, Fasern aus synthetischen Produkten und/oder Fasern aus synthetischen Polymeren handelt, vorzugsweise handelt es sich bei den Textilgeweben um Vliese aus synthetischen Polymerfasern, insbesondere um ein Spinnvlies.

10. Textilgewebe nach Anspruch 6 bis 9, **dadurch gekennzeichnet, dass** es sich bei dem Textilgewebe um ein Vliesgewebe aus Glasfasern und/oder Mineralfasern handelt.

**11.** Unterlagematerial für Unterspannbahnen, Dachbahnen und Dichtungsbahnen, textile Träger oder textile Verstärkungen in Bodenbelägen, insbesondere in Teppichböden und PVC-Bodenbelägen, umfassend mindestens ein Textilgewebe nach einem oder mehreren der Ansprüche 6 bis 10.

**12.** Unterlagematerial nach Anspruch 11, **dadurch gekennzeichnet, dass** es neben dem Textilgewebe nach einem oder mehreren der Ansprüche 6 bis 10 mindestens ein weiteres Textilgewebe aufweist, die sich voneinander unterscheiden.

**13.** Beschichtete Unterspannbahn, Dachbahn und Dichtungsbahn, umfassend mindestens eine Beschichtungsverbindung und mindestens ein Textilgewebe nach einem oder mehreren der Ansprüche 6 bis 10 oder ein Unterlagematerial nach Anspruch 11 oder 12.

**14.** Bodenbelag, insbesondere ein Teppichboden oder ein PVC-Bodenbelag, umfassend einen textilen Träger oder eine textile Verstärkung umfassend mindestens ein Textilgewebe nach einem oder mehreren der Ansprüche 6 bis 10 oder ein Unterlagematerial nach Anspruch 11 oder 12.

**Revendications**

**1.** Système utilisant un liant pour la consolidation de tissus textiles, comprenant :

a) 10 à 90 % en poids de polymérisats à base de dérivés d'esters d'acides carboxyliques insaturés d'acrylates ou de méthacrylates et
b) 90 à 10 % en poids d'un ou plusieurs amidons, lesdits amidons étant choisis parmi les amidons natifs, les amidons cationiques ou les amidons anioniques, et
c) 0 à 60 % en poids d'au moins un additif choisi du groupe des hydroxydes amphotères, des sels des premier et deuxième groupes principaux du tableau périodique, des additifs minéraux qui sont d'origine synthétique ou naturelle, du kaolin, des noirs de carbone ou leurs mélanges et
d) 0 à 10 % en poids d'additifs choisis parmi les conservateurs, les stabilisants, les antioxydants, les agents anti-mousses, les agents hydrophobants et/ou les stabilisants UV

les informations sur les proportions en poids se référant à la masse sèche du système utilisant un liant, c'est-à-dire sans eau et la somme des constituants a) à d) donnant 100 % en poids, et les polymérisats à base de dérivés d'esters d'acides carboxyliques insaturés d'acrylates ou de méthacrylates ayant été obtenus par polymérisation de dérivés d'esters d'acides carboxyliques insaturés monomères qui ont au moins une double liaison terminale et lesdits dérivés d'esters d'acides carboxyliques insaturés d'acrylates ou de méthacrylates ont été estérifiés par la conversion des acides basiques et d'alcools mono- ou polyvalents, ramifiés ou linéaires en $C_1$ à $C_4$.

**2.** Système utilisant un liant selon la Revendication 1, **caractérisé en ce que**, en plus de l'amidon, celui-ci contient au moins deux constituants choisis du groupe des hydroxydes amphotères, des sels des premier et deuxième groupes principaux du tableau périodique, des additifs minéraux qui sont d'origine synthétique ou naturelle, du kaolin, des noirs de carbone.

**3.** Système utilisant un liant selon la Revendication 1 ou 2, **caractérisé en ce qu'**il s'agit d'une dispersion et que la teneur en solides polymères de la dispersion, en particulier la teneur en solides polymères des dispersions, est comprise entre 10 et 40 % en poids.

**4.** Système utilisant un liant selon les Revendications 1 à 3, **caractérisé en ce qu'**il s'agit d'une dispersion et la viscosité de la dispersion est comprise entre 1 et 3 000 mPa*s, mesurée selon la norme DIN EN ISO 2555 à 23°C.

**5.** Utilisation du système utilisant un liant selon une ou plusieurs des Revendications 1 à 4 pour la consolidation des tissus textiles.

**6.** Tissu textile consolidé au moyen d'un système utilisant un liant selon une ou plusieurs des Revendications 1 à 4 et comprenant

a) 10 à 90 % en poids de polymérisats à base de dérivés d'esters d'acides carboxyliques insaturés d'acrylates ou de méthacrylates et
b) 90 à 10 % en poids d'un ou plusieurs amidons, lesdites amidons étant choisis parmi les amidons natifs, les amidons cationiques ou les amidons anioniques, et
c) 0 à 60 % en poids d'au moins un additif choisi du groupe des hydroxydes amphotères, des sels des premier et deuxième groupes principaux du tableau périodique, des additifs minéraux qui sont d'origine synthétique ou naturelle, du kaolin, des noirs de carbone ou leurs mélanges et
d) 0 à 10 % en poids d'additifs choisis parmi les conservateurs, les stabilisants, les antioxydants, les agents anti-mousses, les agents hydrophobants et/ou les stabilisants UV.

les informations sur les proportions en poids se référant à la masse sèche du système utilisant un liant, c'est-à-dire sans eau et la somme des constituants a) à d) donnant 100 % en poids, et les polymérisats à base de dérivés d'esters d'acides carboxyliques insaturés d'acrylates ou de méthacrylates ayant été obtenus par polymérisation de dérivés d'esters d'acides carboxyliques insaturés monomères qui ont au moins une double liaison terminale et lesdits dérivés esters d'acides carboxyliques insaturés d'acrylates ou de méthacrylates ont été estérifiés par la conversion des acides basiques et d'alcools mono- ou polyvalents, ramifiés ou linéaires en $C_1$ à $C_4$.

7. Tissu textile selon la Revendication 6, **caractérisé en ce que** la quantité appliquée du système utilisant un liant est comprise entre 5 et 35 % en poids de liant sec par rapport au poids total du tissu textile brut.

8. Tissu textile selon la Revendication 6 ou 7, **caractérisé en ce que** ledit tissu textile ayant un poids par l'unité de surface compris entre 20 et 500 $g/m^2$ est une structure composée de fibres fabriquée selon un procédé de formation de surface.

9. Tissu textile selon les Revendications 6 à 8, **caractérisé en ce qu'**il s'agit d'un tissu textile à base de fibres naturelles, de fibres synthétiques et/ou de fibres composées de polymères synthétisées, de préférence, les tissus textiles sont des non-tissés en fibres polymères synthétiques, notamment des non-tissés filés-liés.

10. Tissu textile selon les Revendications 6 à 9, **caractérisé en ce que** ledit tissu textile est un non-tissé en fibres de verre et/ou en fibres minérales.

11. Matériau de revêtement pour membranes de sous-toiture, feuilles de toiture et feuilles imperméables, supports textiles ou renforts textiles pour revêtements de sol, notamment moquettes et revêtements de sol en PVC, comprenant au moins un tissu textile selon une ou plusieurs des Revendications 6 à 10.

12. Matériau de revêtement selon la Revendication 11, **caractérisé en ce qu'**il comporte au moins un autre tissu textile en plus du tissu textile selon une ou plusieurs des Revendications 6 à 10 qui est différent l'un de l'autre.

13. Membrane de sous-toiture enduite, feuille de toiture et feuille imperméable, comprenant au moins un composé de revêtement et au moins un tissu textile selon une ou plusieurs des Revendications 6 à 10 ou un matériau de doublure selon la Revendication 11 ou 12.

14. Revêtement de sol, notamment moquette ou revêtement de sol en PVC, comprenant un support textile ou une armature textile comprenant au moins un tissu textile selon une ou plusieurs des Revendications 6 à 10 ou un matériau de doublure selon la Revendication 11 ou 12.

**EP 2 607 533 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2199333 A
- EP 2192153 A
- EP 2231917 A
- DE 3931363 A1
- EP 0446822 A
- EP 0590629 A